# FASCICULE DE BREVET EUROPEEN

(11) **EP 1 623 874 B1**
(45) Date de publication et mention de la délivrance du brevet: **24.10.2007**
(21) Numéro de dépôt: 05106985.4
(22) Date de dépôt: 28.07.2005
(51) Int. Cl.: B60Q 1/14

(54) **Système de retour automatique d'indicateur de changement de direction bas coût**
Automatische Rückstelleinrichtung für einen Fahrtrichtungsanzeiger
Automatic cancelling mechanism of a turn indicator

(30) Priorité: 04.08.2004 FR 0408616
(43) Date de publication de la demande: 08.02.2006
(73) Titulaire: SC2N, 94017 Créteil (FR)
(72) Inventeur: Hallet, Michel, F-14320 Clinchamps-sur-Orne (FR)
(74) Mandataire: Croonenbroek, Thomas Jakob

(56) Documents cités:
- US-A- 4 739 131
- US-A- 5 742 014
- US-A1- 2002 046 935

## Description

La présente invention concerne un système de retour automatique d'indicateur de changement de direction dans un véhicule. notamment dans une automobile.

De nombreux systèmes de ce type ont déjà été proposés à l'heure actuelle.

On peut généralement distinguer deux familles dans ces systèmes.

La premiere famille connue concerne des systèmes de retour automatique d'indicateur de changement de direction entièrement mécanique.

Bien qu'ayant rendu de nombreux services, ils comportent un certain nombre de limitations connues : complexité du dispositif, de fonctionnement intégration dans le véhicule et adaptation des fonctionnalités.

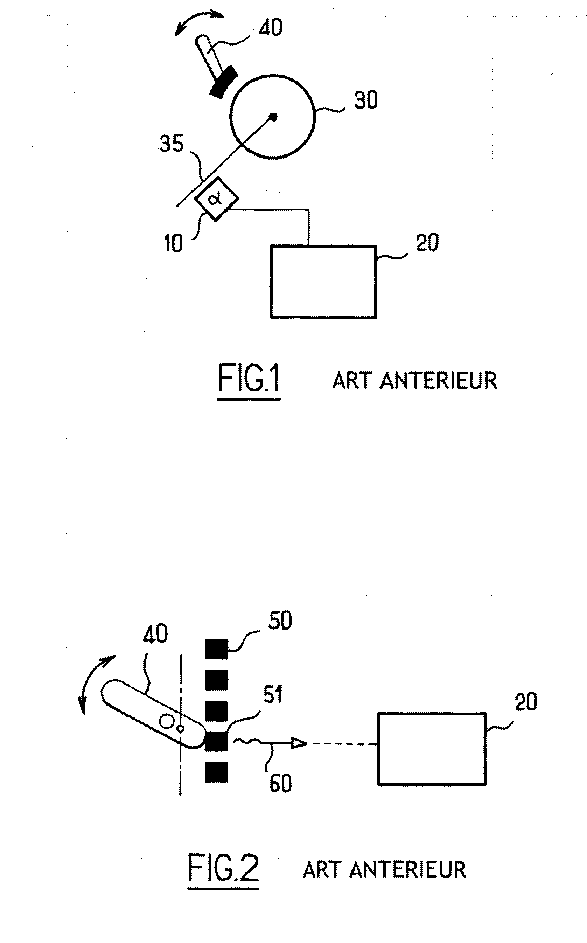

La deuxième famille connue concerne des systèmes de retour automatique d'indicateur de changement de direction électromécanique (voir figure 1).

Des systèmes typiques de cette deuxième famille comportent un capteur d angle 10 pour détecter puis analyser au moyen d'un module électronique 20 une rotation d'un volant 30 relié à un arbre de direction 35 lorsqu'un conducteur a sollicité un moyen de commande 40 mécanique apte a être guidé à déplacement à gauche ou à droite et à commander une indication de changement de direction appropriée.

La commande d'indication de changement de direction est rendue possible grâce à un ensemble de transducteurs sensibles au déplacement du moyen 40.

A titre d'exemple, la figure 2 montre un moyen de commande 40 déplacé en rotation dans le sens des aiguilles d'une montre jusqu'à une position intermédiaire qui correspond à une sensibilisation du transducteur 51,

Cette situation correspond à une alimentation particulière de changement de direction vers la droite.

Un signal 60 est transmis à l'unité de gestion électronique qui va l'analyser et commander des actions appropriées, tel l'éclairage d'un clignotant droit.

Lorsque l'utilisateur tourne maintenant le volant dans le sens inverse des aiguilles d'une montre, le capteur d'angle 10 détecte la rotation du volant et transmet une information au module électronique afin que celui-ci puisse éventuellement interrompre ladite alimentation d'indication de changement de direction.

En fait, cette interruption n'a lieu que lorsque un événement requis par le module de gestion électronique apparaît.

Plus précisément, le capteur d'angle qui génère selon les cas des informations sur la position relative ou absolue du volant.

Ces informations sont traitées par le module de gestion pour déterminer de manière aussi pertinente que possible si, selon elles, il convient d'annuler la commande d'indication de changement de direction.

Une bonne performance de cette fonction d'annulation repose donc sur une réalisation d'un capteur d'angle efficace et précis accompagné d'un système de traitement en parfaite adéquation avec ce capteur.

Les solutions proposées à l'heure actuelle tendent à multiplier le nombre de capteurs afin de fournir au module de gestion électronique une plus grande quantité d'lnformations.

A titre d'exemple ces capteurs foumissent des informations sur le sens de rotation du volant et également sur sa position angulaire.

Ces solutions ont toutefois des inconvénients non négligeables tels que le coût du système et une difficile intégration de celui-ci aux environs du volant, du fait notamment d'un certain encombrement des capteurs.

Ce dernier point prend d'ailleurs toute son impqrtance quand on sait qu'il est de plus en plus envisagé, grâce à l'avancement des technologies dans le domaine notamment automobile, de supprimer l'arbre de direction sur lequel se trouvent lesdits capteurs d'angles.

Une telle modification conduit en effet à devoir rapprocher autant que possible ces capteurs d'angle du volant, ce qui n'est pas exempt de difficulté puisque, comme évoqué précédemment, ces capteurs restent encombrants.

Afin de répondre à un tel problème, certaines améliorations connues ont permis de réduire le nombre de capteurs et de simplifier leur structure, rendant ainsi possible une intégration d'un système d'indicateur de changement de direction comprenant ces capteurs dans des systèmes de direction dépourvus d'arbre de direction.

Cependant, ces systèmes, et notamment les capteurs d'angles qu'ils utilisent nécessitent encore d'être améliorés.

En particulier, il est important de poursuivre notamment la réduction de l'encombrement des capteurs.

Mais ceci ne doit absolument pas se faire au détriment d'une bonne coopération du capteur avec le module électronique de gestion.

En d'autres termes, le capteur doit être néanmoins capable de fournir une information suffisamment pertinente au module de gestion pour déterminer précisément une occurrence d'un événement d'interruption des indicateur de changement de direction.

Ainsi la présente invention propose un système d'indicateur de changement de direction évolué qui permet de s'affranchir de l'ensemble des inconvénients précités tout en garantissant de bonnes performances.

Elle propose en particulier un système d'indicateur de changement de direction où coopèrent un module de gestion électronique, un équipage à commande de type impulsionnel et un capteur d'angle extrêmement plat en comparaison à l'état de la technique.

Plus précisément encore, la présente invention propose un système de retour automatique d'indicateur de changement de direction associé à un volant, comprenant un équipage guidé à déplacement pour commander alternativement une alimentation des indicateurs de changement de direction gauche ou droit dans un mode de route et/ou autoroute, un module électronique de gestion desdites commandes destiné notamment à interrompre l'allmentation des indicateurs de changement de direction quand un événement requis est détecté, un moyen de détection de rotation du volant apte à fournir l'événement requis au module de gestion, caractérisé en ce que ce moyen de détection comporte au moins un disque muni sur une face d'un matériau conducteur et d'au moins deux organes conducteurs en regard de, et en contact local avec ladite face, de sorte que, lors d'une rotation du volant, ces organes et ledit matériau peuvent entrer en contact, et en ce que la face du disque au moins prévu ainsi que le matériau conducteur s'étenden dans un plan perpendiculaire à l'axe de rotation du volant.

Des aspects préférés, mais non limitatifs de ce système de retour automatique d'indicateur de changement de direction, associé à un volant selon la présente invention, sont les suivants :
- les organes conducteurs sont agencés de telle sorte qu'ils sont en contact local pennanent avec le disque au moins prévu,
- le matériau conducteur définit des pistes électriques disposées radialement par rapport à l'axe du disque.
- le matériau conducteur définit des pistes électriques rectangulaires sensiblement arquées longitudinaiement de telle manière qu'elles aient une forme sensiblement concave par rapport à l'axe de rotation du volant,
- les organes sont disposés le long de l'axe radial du disque de telle manière que lors d'une rotation du volant, chacun d'eux peut entrer en contact avec une piste correspondante,
- il comporte un disque muni d'un matériau conducteur formant au moins deux portions de couronne électrique décalées anguiairement qui définissent un ensemble de deux pistes électriques et en ce que chacun des deux organes au moins prévu est agencé de telle manière qu'il peut entrer en contact avec l'une des deux pistes électriques au moins prévue, de sorte que, notamment, un sens de rotation du volant est détecté selon que l'un ou l'autre des organes entre en premier en contact avec sa piste correspondante,
- le matériau conducteur définit en outre une troisième piste électrique en forme de couronne sur la face du disque,
- la troisième piste et les deux portions de pistes au moins prévues sont en contact,
- une portion de la troisième piste se trouve entre les deux autres pistes,
- il comporte trois organes conducteurs disposés radialement par rapport à l'axe du disque, chacun des trois organes étant respectivement associé à une des trois pistes électriques,
- l'orgiane conducteur associé à la troisième piste est connecté à une masse électrique,
- les organes conducteurs sont fixes et le disque est sollicité en rotation par le volant,
- le disque est Intégré au volant,
- outre la troisième piste, le disque est muni de quatre portions de couronne électrique qui définissent quatre pistes électriques, celles-ci étant décalées deux à deux angulairement et disposées deux à deux de façon diamétralement opposée autour du disque,
- il comporte au moins deux pistes distinctes décalées angulairement et disposées radialement par rapport à l'axe du disque et au moins deux organes conducteurs associés respectivement aux deux pistes, ces organes étant disposés en regard de la face du disque de sorte qu'ils puissent entrer en contact avec la piste correspondante lors d'une rotation du volant,
- les disques sont fixes et les organes conducteurs sont sollicités en rotation par le volant,
- les disques sont intégrés au volant,
- les organes conducteurs sont des frotteurs,
- les organes conducteurs sont des lames métalliques courbées.

Ainsi, la présente invention offre de nombreux avantages.

Notamment, on profite avantageusement de l'intégration dans ce type de système d'un moyen de détection de rotation particulièrement peu épais dans la direction de l'axe de rotation du volant et donc particulièrement adapté pour être positionné sans difficulté très proche du volant.

A ce titre, l'invention prévoit même d'intégrer ce moyen de détection, voire l'ensemble du système, dans le volant lui-même.

Les montages dans la chaîne de fabrication sont ainsi simplifiés et on réalise dans le même temps un volant doté de fonctions intelligentes.

Un autre avantage du système de l'invention veut qu'il soit particulièrement fiable et résistant à l'usure.

En particulier, dans le moyen de détection de rotation proposé, les forces de contact mises en jeu entre les organes conducteurs et le disque sont sensiblement constantes au cours d'une rotation du volant.

Ainsi, si des microchocs peuvent exister lorsque lesdits organes et le matériau conducteur se rencontrent au cours d'une rotation du volant, ceux-ci n'en demeurent pas moins négllgeables, ce qui limite la corrosion de ces organes et de ce matériau conducteur.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la figure 1 illustre schématiquement et en partie un système de d'indicateur de changement de direction électromécanique de l'état de l'art,
- la figure 2 montre schématiquement un moyen de commande 40 associé à des transducteurs et communiquant à une unité de gestion électronique une information sur sa position,
- la figure 3 montre un système d'indicateur de changement de direction selon la présente invention, ainsi qu'un assemblage possible de ce système aux environs d'un volant,
- la figure 4 représente un premier mode de réalisation d'un moyen de détection de rotation utilisé dans le système selon l'invention,
- la figure 5 représente un deuxième mode de réalisation d'un moyen de détection de rotation utilisé dans le système selon l'invention,
- la figure 6 montre, à titre illustratif et de façon non limitative, une intégration possible du deuxième moyen de détection de rotation, proposé notamment figure 5, dans un boitier accueillant également un équipage guidé à déplacement autour d'un de rotation,
- la figure 7 montre une variante possible de réalisation du deuxième moyen de détection de rotation proposé notamment figure 5 et utilisé avantageusement dans le système selon l'invention,
- les figures 8 illustrent un exemple de fonctionnement du système selon l'invention utilisant le premier moyen de détection de rotation du volant,
- les figures 9 servent d'illustration à une description d'une situation particulière pouvant être rencontrée lors du fonctionnement du système selon l'invention,

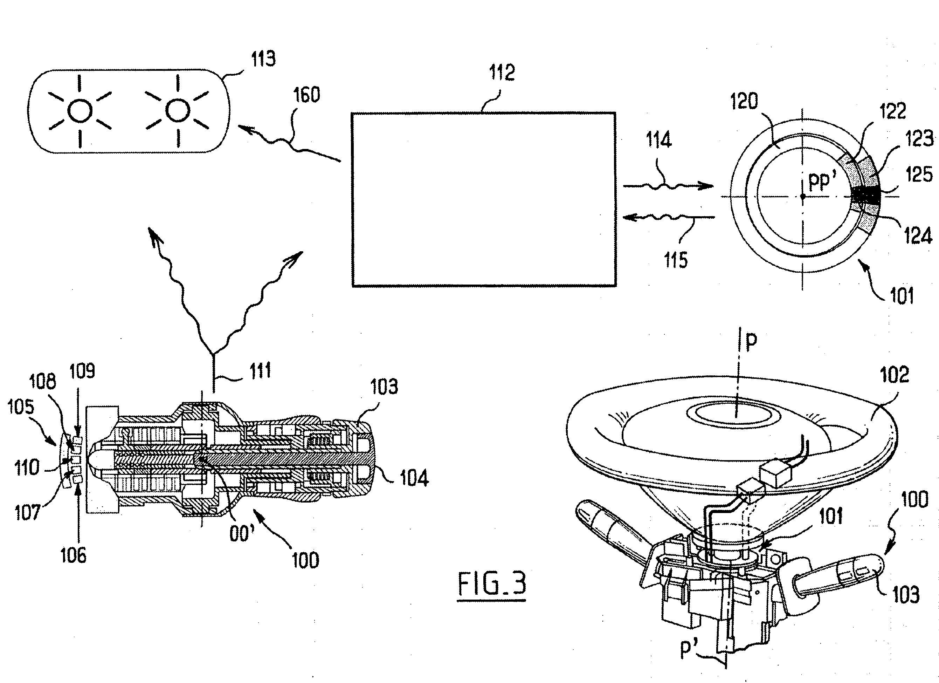

En se référant maintenant à la figure 3, on peut visualiser un équipage 100 à commande de type impulsionnel. guidé à déplacement et un moyen de détection 101 de rotation d'un volant 102, du type capteur d'angle.

Cette figure montre en outre un assemblage possible de ces trois éléments 1 00, 101 et 102.

L'équipage 100 possède un élément 103, tel un levier de commande, censé être sollicité à une des extrémités longitudinales 104 par un conducteur et pivoter ainsi selon un certain angle autour d'un axe OO'.

Par ailleurs, on trouve à l'extrémité distale du point de sollicitation un module 105 de détection de position angulaire.

Selon un aspect préféré de l'invention, ce module 105 comporte cinq contacts distincts 106-110 disposés les uns à coté des autres sur une périphérie d'une portion d'un cercle imaginaire dont un axe central est l'axe de pivotement OO' de l'élément 103.

Chacun de ces contacts permettent donc de détecter une position angulaire déterminée de l'élément 103.

En particulier, on dispose d'un contact central 110 pour détecter un angle de zéro degré, c'est-à-dire une position de repos 110 de l'élément 103 pour laquelle il n'est pas solicité. et de deux contacts 106, 107 et 108,109 pour détecter deux positions angulaires distinctes de part et d'autre de la position de repos 110.

Dès qu'une position angulaire prévue est détectée lors d'une alimentation de l'un quelconque de ces quatre contacts, un signal est généré pour commander une alimentation d'un indicateur de changement de direction.

En particulier, les contacts 107 et 108 les plus proches du contact central 110 correspondent à l'alimentation d'un indicateur de changement de direction gauche et droit respectivement en mode dit autoroute.

Cette fonction est active tant que l'élément 103 est maintenu en position 107 ou 108 selon le cas.

En effet lorsque le conducteur ne sollicite plus cet élément 103, celui-ci revient automatiquement en position de repos 110 initiale et l'alimentation de l'indicateur de changement de direction s'interrompt ainsi aussitôt.

Si une telle alimentation en mode autoroute correspond à ainsi allumer un clignotant tant que l'élément 103 est maintenu en position 107 ou 108, l'invention n'exclut pas de prévoir tout autre type d'alimentation des clignotants.

A titre d'exempte, on peut prévoir que la sollicitation du contact 107 génère un succession d'allumages du clignotant droit (trois allumages par exemple).

Ainsi, tant que l'élément 103 est maintenu en position 108, le clignotant droit est allumé et lorsqu'il est relâché, la dernière commande d'indication de changement de direction droit est prise en compte, ce qul génère une dernière succession d'allumages du clignotant en quaistion.

Bien entendu, l'homme du métier reconnaitra ici diverses variantes possibles à cette forme de réalisation.

Dans tous les cas, comme on l'aura compris, dans le mode autoroute de la présente invention, on ne prend pas en compte la sollicitation en rotation du volant 102, à l'aide du moyen de détection de rotation 101, pour interrompre une alimentation d'indicateur de changement de direction.

Ceci n'est pas le cas en revanche pour ce qui concerne une alimentation en mode route.

Une telle alimentation est commandée lorsque les contacts 106 et 109, situés respectivement aux extrémités de ladite portion du cercle imaginaire, sont sollicités lors du pivotement de l'élément 103 autour de l'axe OO'.

Dès que l'un de ces contacts 106,109 est alimenté, un signal 111 de commande d'alimentation d'un indicateur de changement de direction approprié est généré.

Ce signal 111 est transmis, d'une part, à l'un des clignotants 113 pour l'allumer et, d'autre part, à un module de gestion 112,; typiquement un circuit électronique analogique ou numérique (FPGA, composants discrets. DSP, etc....), qui gère l'interruption de cette alimentation d'indicateur de changement de direction au moyen, notamment, du moyen de détection de rotation 101.

Afin de comprendre plus en détails le fonctionnement du système en mode route, on va maintenant décrire le moyen de détection de rotation 101 du volant 102.

Dans un premier mode de réalisation de l'invention, ce moyen 101 est schématiquement conforme à la représentation sur la figure 3.

Il comporte un disque 120, fixe par rapport au volant, dont les faces s'étendent dans un plan perpendiculaire à l'axe de rotation PP' du volant 102.

Une face du disque 120 est munie, en partie seulement, d'un matériau conducteur 122,123 de manière à définir deux pistes électriques 122,123 distinctes.

Ces deux pistes 122 et 123 sont disposées radialement par rapport à l'axe du disque 120 et sont chacune de forme rectangulaire, sensiblement arquées longitudinalement, de telle sorte qu'elles aient finalement une forme sensiblement concave par rapport à l'axe PP' de rotation du disque 120 ou du volant 102.

Par ailleurs, elles sont agencées sur la face du disque de telle sorte qu'il existe entre elles un décalage angulaire autour de l'axe PP'.

Ainsi, à titre d'exemple, la piste 122 possède une première partie en vis-â-vis avec la piste 123 et une seconde partie dépourvue de vis-à-vis.

Le moyen de détection comporte en outre deux organes conducteurs 124,125 disposés en regard des faces du disque 120,121 qui possède les pistes 122, 123.

Ces organes 124, 125 sont donc disposés radialement rapport à l'axe PP' du disque.

Par ailleurs, ils sont solidaires du volant 102, de sorte qu'ils peuvent entrer en contact avec la piste correspondante 122,123 respectivement lorsqu'ils sont sollicités en pivotement autour de l'axe PP' par le volant 102.

Selon un aspect préféré de l'invention, ces organes 124,125 prennent place sous le volant et préférentiellement encore dans celui-ci, de manière à disposer d'un ensemble le plus intégré et le moins encombrant possible dans la direction de l'axe PP'.

En outre, si ces organes 124, 125 peuvent posséder différentes formes. il est important de préférer celles qui privilégient, encore, un faible encombrement le long de l'axe PP'.

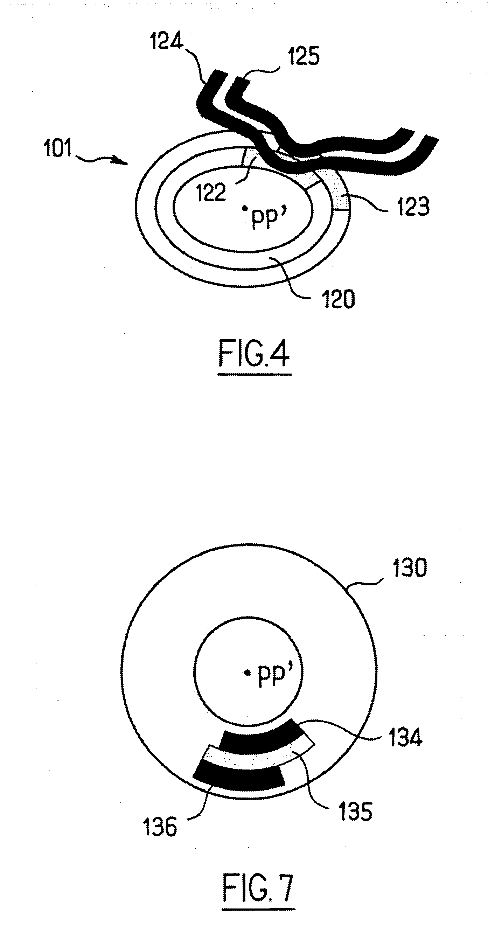

Ainsi, à titre d'exemple, les organes conducteurs 124, 125 peuvent être des frotteurs 128, 127 en forme de lame métalliques comme représentées sur la figure 4.

Ces lames 124,125 sont sensiblement plates dans le souci de limiter l'encombrement.

Elles ont en outre, au moins en partie, une forme convexe par rapport à l'axe PP' de rotation du disque 102 pour venir prendre contact avec la face de ce demier sur une zone locale restreinte,

De cette manière, la surface de contact entre une piste 122,123 et une lame correspondante 124,125 est. elle aussi, relativement faible, ce qui confère au moyen de détection 101 une bonne précision angulaire de détection de position.

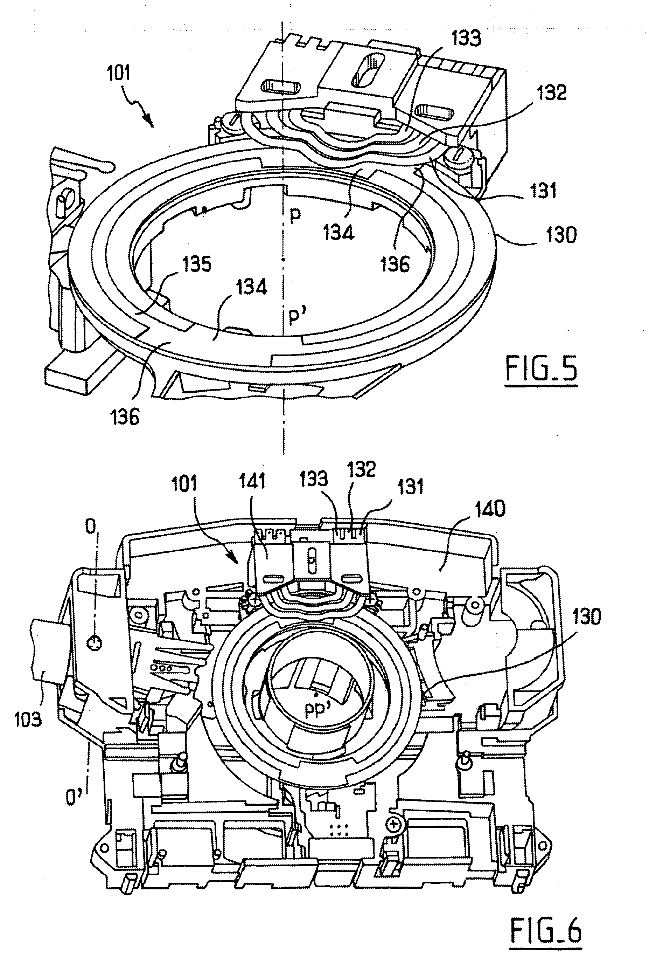

Dans un deuxième mode de réalisation de l'invention, le moyen de détection de rotation 101 comporte aussi un disque 130 (voir les figures 5 et 6), dont une face s'étend dans un plan perpendiculaire à l'axe de rotation PP' du volant de manière à prendre le moins de place possible dans la direction de l'axe PP'

Cependant, contrairement au premier mode de réalisation décrit plus haut. les organes conducteurs 131-133, préférentiellement de forme identique à ceux utilisés dans le premier mode réalisation, ne sont plus solidaires du volant 102.

Ils sont en effet fixés à un support solidaire de l'habitacle par exemple. tandis que c'est le disque 130 qui est solidaire, par exemple, du volant et qui, ainsi, peut être amené à pivoter autour de l'axe PP'.

Le matériau conducteur sur la face de ce disque possède une forme qui permet de définir au moins deux pistes électriques, en contact, disposées radialement par rapport à l'axe PP', associées chacune à des organes conducteurs et décalées angulairement l'une de l'autre.

Par exemple sur la figure 5, le disque est muni de deux pistes 134 et 136 et d'une piste commune 135, ces trois pistes étant en contact et associées aux trois lames conductrices 131, 133 et 132 respectivement.

La piste 135 est préférentiellement de forme circulaire autour de l'axe PP' de rotation du disque 130, et les deux pistes 134 et 136 sont, chacune comme dans le premier mode de réalisation, de forme rectangulaire, sensiblement arquée longitudinalement, de telle sorte qu'elles aient finalement une forme sensiblement concave par rapport à l'axe PP' de rotation du disque 120 ou du volant 102.

On peut voir également que la piste 134 est une piste centrale, au sens où elle se situe radialement entre deux pistes 134 et 136.

Typiquement, cette piste centrale 134 est connectée à une masse du circuit dès qu'elle est en contact avec sa lamelle 132 associée, si bien qu'un courant est susceptible de passer entre la lame centrale 132 à la lame (aux lames) adjacente(s) 131 et/ou 133 lorsque cette (ces) demière(s) est (sont) en contact avec la piste correspondante 134 et/ou 136 respectivement.

Ce deuxième mode de réalisation préféré permet donc, lui aussi, de s'intégrer très facilement aux environs du volant.

En particulier, l'encombrement de ce moyen de détection 101 dans de le sens de l'axe PP' étant très faible, on peut l'insérer aisément sous le volant 102 le long dudit axe.

La figure 6 montre à cet égard un exemple, non limitatif, d'intégration possible d'un tel moyen 101 dans un boîtier 140 accueillant également le levier 103 guidé à déplacement autour de l'axe OO'.

Le disque 130 est solidaire du volant (non représenté) et les lamelles 131-133 sont fixées à un élément 141, lui-même solidaire du boîtier 140 qui se trouve sous le volant 102.

Lorsque le conducteur sollicite ce dernier, le disque est entraîné en rotation.

Et, selon l'angle de cette rotation, les lames 131 et 132 entrent éventuellement en contact avec la piste correspondante 136 et 134 respectivement.

Comme on peut le voir d'après cette figure 6, le système de retour automatique proposé s'intègre bien, notamment dans le boîtier déjà prévu pour accueillir l'équipage 100.

Selon un autre aspect de l'invention, le disque 130 n'est plus à une certaine distance du volant sous celui-ci.

II se trouve directement encastré sous le volant lui-même.

A cet effet, on creuse un moule dans le matériau qui constitue le volant (ce matériau est typiquement du plastique dur), ledit moule ayant une forme complémentaire à celle du disque 102.

En outre, ce demier est encastré en prenant garde de laisser la face munie des pistes électriques à l'air llbre, afin que les organes conducteurs puissent entrer en contact avec elles,

Une telle disposition permet avantageusement de réduire encore plus l'encombrement lié à ce moyen de détection 101.

Bien entendu l'Homme du métier comprendra que, dans le premier mode de réalisation, ce sont les organes conducteurs que l'on encastre sous le volant 102.

Par ailleurs, il reconnaîtra d'autres modes de réalisation possibles de ce moyen de détection 101.

En particulier, les figures 5 et 6 montrent une variante dans laquelle le disque 130 est muni d'un matériau conducteur définissant cinq pistes : une piste centrale 135 et deux ensembles de deux pistes 134 et 136, ces deux ensembles étant diamétralement opposés autour du disque.

Cette variante permet par exemple d'augmenter les occurrences de détection du sens de rotation du volant.

Une autre variante peut consister à supprimer la piste centrale 135 hors des zones de contact possibles avec les pistes adjacentes 134 et 136.

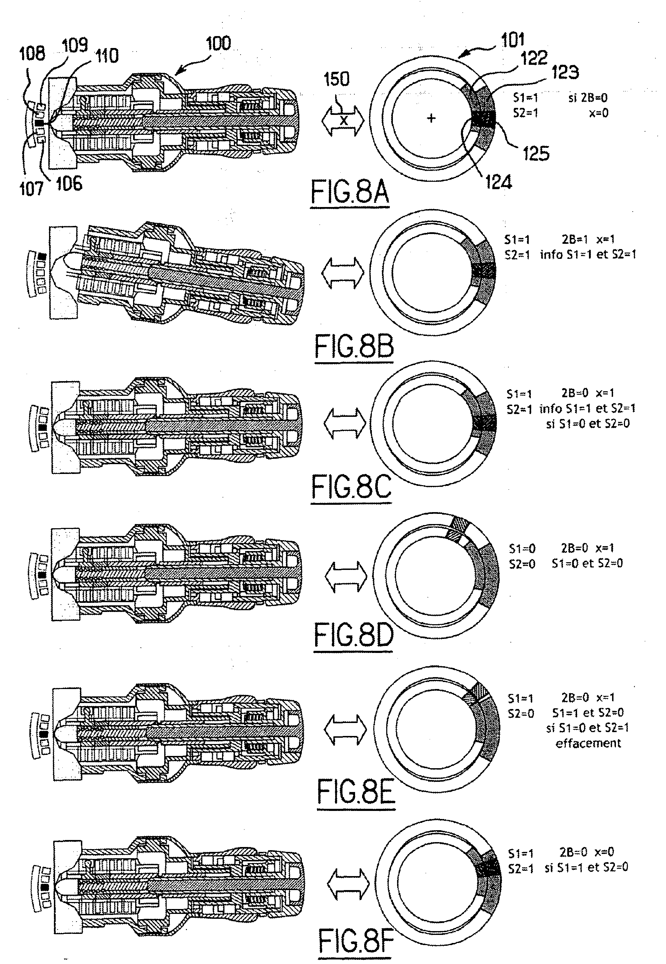

La figure 7 montre schématiquement un disque selon une telle variante.

De c e manière, on réalise notamment des économies sur le matériau conducteur.

Une autre variante évidente encore, consiste à utiliser un disque dont les portions de piste 134 et 136 coïncident avec les bords internes et extemss respectivement du disque 130.

Une autre variante évidente possible consiste à inverser les fonctionnements de chacun des deux modes de réalisation proposés ci-dessus.

En particulier, dans le premier mode de réalisation où les deux pistes sont distinctes, on peut choisir de rendre le disque, plutôt que les organes, solidaire du volant etc.

On va maintenant décrire le fonctionnement du système qui vient d'être décrit lorsqu'une commande d'alimentation d'indicateur de changement de direction en mode route a été activée.

Comme évoqué précédemment, une telle commande est activée lorsque l'élément 103 est sollicité en pivotement et qu'ainsi l'un des contacts 106 ou 109 est activé.

A cet instant, le clignotant approprié est allumé et le module de gestion 112 recevant le signal 111 prend en compte les informations fournies par le moyen de détection de rotation 101 du volant pour déterminer s'il convient d'interrompre ladite alimentation.

A cet égard les figures 8A-8F illustrent un exemple non limitatif de situation où l'élément 103 est sollicité en pivotement de telle manière qu'une commande d'alimentation d'indicateur de changement de direction droit en mode route est activée.

Sur chacune de ces figures, on peut voir :
- à gauche l'équipage 100 comportant les cinq contacts 106 à 109,
- au centre un symbole en forme de double flèche 150 pour indiquer, en fond blanc, que les clignotants sont éteints et, en fond noir qu'ils sont allumés, et le moyen de détection de rotation 101 selon le premier mode de réalisation proposé ci-dessus, c'est-à-dire muni de deux pistes 122 et 123 distinctes,
- à droite, des variables d'état éventuellement utilisées par le module de gestion électronique 112 pour analyser les mouvements de rotation dudit moyen de détection 101.

La fi gure 8A Illustre le début de cet exemple.

L'équipage 100 n'est pas encore sollicité par le conducteur.

II se trouve donc dans sa position de repos, le contact 110 étant alimenté (en noir).

Bien évidemment, les clignotants ne sont pas allumés (double flèche 150 blanche) et les informations issues du moyen de détection de rotation 101 ne sont pas analysées par le module de gestion électronique 112 (indiqué par une croix dans la double flèche blançhe).

Cependent à titre indicatif, on peut voir ici que les organes 124,125, solidaires du volant dans ce mode de réalisation, sont en contact avec leur piste respective 122,123.

Dans ce cas, le moyen de détection 101 fournit au module de gestion électronique 112 un signal électrique 115 approprié, par exemple un niveau logique 1 du analogique A.

De son côté, le module de gestion 112 met à jour certaines variables pour mémoriser et analyser au moment voulu les mouvements du moyen de détection de rotation 101.

Par exemple, il utilise deux variables B et X. la première assignée à 1 lorsque l'un des contacts 106 ou 109 de l'équipage 100. relatifs au mode route, est alimenté, la seconde assignée à 1 lorsque les informations issues du moyen de détection de rotation 101 sont en cours d'analyse par le module de gestion 112.

Ainsi, sur la figure 8A, le contact central 110 étant alimenté, B est égale à 0 et il en découle que, les informations issues du moyen de détection de rotation 101 n'étant pas à analyser par le module de gestion 112, la variable X est aussi égale à 0.

Un instant plus tard, le conducteur sollicite l'équipage 100 en rotation dans le sens des aiguilles d'une montre pour indiquer un changement de direction à droite (figure 8B).

Le contact 109, relatif au mode route, est alimenté, un signal 111 active les clignotants 113 (double flèche 150 noire) et le module de gestion commence à analyser les informations issues du moyen de détection de rotation 101 (X égale à 1).

On notera également, que la variable B est égale à 1 puisque l'un des contacts relatifs au mode route est actuellement activé.

En outre, pour analyser les mouvements du moyen de détection de rotation 101, le module de gestion 112 utilise deux nouvelles variables S1 et S2, plus un drapeau noté NPC.

### S1 et S2 indiquent respectivement si les pistes 122 et 123 sont en contact avec leur organe conducteur 124, 125 respectif.

A titre d'exemple non limitatif, lorsqu'un contact est effectivement établi sur l'une de ces pistes, le module de gestion 112 assigne une valeur 1 à la variable Si correspondante.

Ainsi, sur la figure 8B, S1 et S2 sont égales à 1 puisque les contacts sont établis sur les pistes 122 et 123.

Le drapeau NPC indique si les deux organes conducteurs 124,125 ont cessé d'être en contact avec leur piste respective 122, 123 depuis que la variable X est égale à 1, c'est-à-dire depuis que le module de gestion 112 a commence ladite analyse.

Un tel drapeau est utilisé comme suit :
- actifs lorsque les deux organes conducteurs mentionnés sont toujours en contact avec leur piste correspondante,
- inactif, lorsque les deux organes conducteurs mentionnés ne sont plus en contact avec leur piste correspondante.

Ainsi sur la figure 8B, le drapeau NPC est actif puisque les deux organes 124, 125 sont en contact avec les pistes 122, 123.

En se référant maintenant à la figure BC, le conducteur ne sollicite plus l'équipage 100 en rotation.

Ce dernier revient donc automatiquement en position de repos initiale et alimente ainsi le contact central 110.

Le module de gestion 112, informé par un signal 111, assigne la valeur 0 à la variable 8, les autres variables restant inchangées.

La figure 8D montre, un instant plus tard encore, que le conducteur toumant le volant, sollicite les organes 124, 125 en rotation dans le sens contraire des aiguilles d'une montre.

Ces demiers pivotent autour de l'axe PP' selon un angle tel qu'ils cessent d'être en contact avec les pistes 122 et 123.

Le moyen de détection de rotation fournissant continûment une information sur l'état des contacts, indique ce changement au module de gestion 112 au travers d'un signal 115.

Et le module de gestion 112 assigne en conséquence la valeur nulle aux variables S1 et S2, et désactive le drapeau NPC.

Sur la figure 8E, le conducteur ayant maintenant changé de direction, sollicite le volant en rotation en sens inverse, c'est-à-dire dans le sens des aiguilles d'une montre.

Les organes de conduction 124,125 se rapprochent des pistes respectives 122,123 et c'est l'organe 124 qul entre en premier en contact avec la piste 122.

De ce fait, le module de gestion assigne la valeur 1 à la variable S1.

Plus généralement, J'état des variables à cet instant est donc le suivant :

| S1=1 S2=0 | Seule la piste 122 est en contact avec l'organe de conduction 124 |
|---|---|
| X=1 | Analyse en cours |
| B=0 | Equipage en position d'équilibre |
| NPC | désactivé |

Le module de gestion 112 considère alors que l'alimentation d'indication de changement de direction ne doit pas encore être interrompue.

En effet, la variable S2 n'est pas encore égale à 1, ce qui indique que, malgré un retour du volant, celui-ci n'a pas encore retrouvé une position proche de la position initiale (celle de la figure 8A).

Ainsi, si l'on suppose que le volant est de nouveau sollicité dans le sens contraire des aiguilles d'une montre selon un angle tel que l'organe 124 cesse de nouveau d'être en contact avec la piste 122, le module de gestion 112 assigne une nouvelle valeur 1 à la variable S1, de sorte que l'on se retrouve dans la situation décrite dans la figure 8D.

Au contraire, en se référant à la figure 8F, si le conducteur continue à tourner le volant dans le sens des aiguilles d'une montre, l'organe 125 finit, lui aussi, par entrer en contact avec la piste 123, correspondant ainsi à un retour du volant dans une position proche de la position initiale illustrée sur les figures 8A et 8B.

Le module de gestion assigne donc la valeur 0 à la variable S2.

Un tel événement est alors reconnu par le module de gestion électronique 112 comme une commande d'interruption d'alimentation des indicateurs de changement de direction.

On rappelle ici de manière plus détaillée, que cet événement correspond à une situation de combinaison des variables et drapeaux suivante :

| S1 = 1 S2 = 1 | Les pistes sont en contact avec leur organe respectif |
|---|---|
| X=1 | Analyse en cours |
| B=0 | Equipage en position de repos |
| NPC | Désactivé |

Comme indiqué sur la figure 8F, les clignotants recoivent du module de gestion électronique 112 un signal 160 de commande d'interruption d'alimentation (double flèche blanche).

Par aileurs, l'analyse, par le module de gestion électronique, du moyen de détection de rotation ayant abouti, la variable X est initialisée à 0.

Les mouvements en rotation du moyen de détection 101 ne sont donc plus analysés par le module de gestion électronique 112 (indiqué sur le dessin par a double flèche munie d'une croix).

On peut voir à travers cet exemple que le moyen de détection 101 et le module de gestion électronique 112 sont tels que leur coopération est simple et efficace.

En l'occurrence, une telle efficacité est particulièrement apparente dans le cas de situations particulières présentées de manière non limitatives ci-dessous.

Une situation particulière non abordée jusqu'ici rèside en ce que. à partir de la situation décrite dans la figure 8D, le conducteur pourrait tourner le volant dans le sens des aiguilles d'une montre mais selon un angle bien plus important que celui illustré.

Par exemple le conducteur pourrait tourner la volant dans le sens contraire des aiguilles d'une montre selon un angle tel que c'est l'organe 125 qui entre en premier en contact avec la piste associée 123.

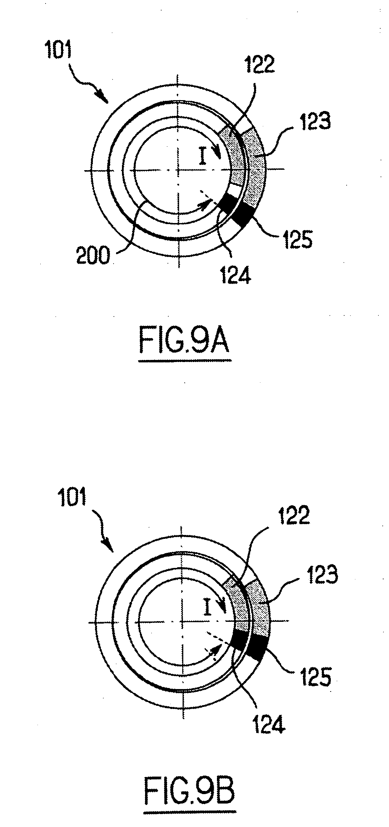

Une telle situation est illustrée sur la figure 9A où la flèche 200 indique le parcours effectué par les organes conducteurs depuis la position initiale, notée I.

Une analyse des variables à un tel instant donnerait :

| S1 = 0 S2 = 1 | Seule la piste 123 est en contact avec l'organe associé 125 |
|---|---|
| X=1 | Analyse en cours |
| B=0 | Equipage en position d'équilibre |
| NPC | Désactivé |

puis, lorsque le volant poursuit cette rotation et que l'organe conducteur 124 entre ensuite en contact avec la piste 122 (figure 9B) :

| S1=1 S2=1 | Seule la piste 123 est en contact avec l'organe associé 125 |
|---|---|
| X=1 | Analyse en cours |
| B=0 | Equipage en position d'équilbre |
| NPC | Désactivé |

Dans ce cas, le module de gestion, reconnaissant qu'un tour complet du volant a été effectué, utilise une autre variable NBT qul indique le nombre de tours comp lets effectués par le moyen de détection de rotation 101.

Ainsi, lorsque le deuxième contact entre l'organe 124 et la piste 122 a lieu, le module de gestion 112 incrémente la variable NBT (valeur 1 pour un tour, etc. ...)

Le module de gestion continue ensuite l'analyse des informations fournies par le moyen de détection de rotation 101.

Lorsque le conducteur sollicite maintenant le volant en rotation dans le sens des aiguilles d'une montre. la variable S1 passe en premier à 0.

Le module de détection décrémente NBT dès que la variable S2 passe en deuxième à zéro et on se retrouve dans la situation décrite dans la figure 8D.

On notera donc ici, que ledit événement d'interruption d'alimentation d'indication de changement de direction n'est détecté par le module de gestion 112 uniquement dans la condition où la variable NBT est égale à 0.

Finalement, l'exemple qui vient d'être décrit n'est nullement limitatif.

En l'occurrence, on adaptera l'ensemble du raisonnement ci-dessus à la situation inverse où le conducteur sollicite l'équipage 100 en rotation dans la sens contraires des aiguilles d'une montre pour commander une alimentation de changement de direction gauche.

Une autre situation particulière non abordée jusqu'ici correspond à une situation où le conducteur sollicite l'équipage en rotation pour commander une alimentation d'indication de changement de direction en mode route alors que le volant a déjà été toumé selon un angle tel que les organes conducteurs ne sont plus en contact avec leur piste respective.

Dans cette situation, lorsque la variable B est initialisée à 1, le module assigne aussitöt la valeur 0 à S1 et S2, 1 à X et désactive NPC.

Puis, l'analyse des informations issues du moyen de détection de rotation 101 reprend comme cela est décrit plus haut à partir de la figure 8D.

Bien entendu, la présente invention n'est nullement limitée à la forme de réalisation décrite ci-dessus et représentée sur les dessins.

En particulier, l'homme du métier pourra, en variante, régler le décalage angulaire entre les pistes 122 et 123 dans le premier mode de réalisation, ou 134, 136 dans le deuxième mode de réalisation, en fonction de la tolérance souhaitée vis-à-vis d'erreurs possibles d'interprétation sur une détection d'un événement commandant une interruption d'alimentation des indicateurs de changement de direction en mode route.

Par ailleurs, le recours à des technologies de communications sans fils est une variante évidente des moyens envisagés par l'invention pour transmettre notamment des informations entre le module de gestion 112 et le moyen de détection de rotation 101 ou l'équlpage 100 apte à être guidé en déplaceme ou les feux clignotants 113.

## Revendications

1. Système de retour automatique d'indicateur de changement de direction associé à un volant (102), comprenant un équipage (100) guidé à déplacement pour commander alternativement une alimentation des indicateurs (113) de changement de direction gauche ou droit dans un mode de route (106 ; 109) et/ou autoroute (107; 108), un module électronique de gestion (112) desdites commandes destiné notamment à interrompre l'alimentation des indicateurs (113) de changement de direction quand un événement requis est détecté, un moyen de détection de rotation (101) du volant (102) apte à fournir l'événement requis au module de gestion (112), **caractérisé en ce que** ce moyen de détection (101) comporte au moins un disque (120 ; 130) muni sur une face d'un matériau conducteur (122 ; 123) et d'au moins deux organes conducteurs (124 ; 125) en regard de, et en contact local avec ladite face, de sorte que, lors d'une rotation du volant (102), ces organes (124 ; 125) et ledit matériau (122 ; 123) peuvent entrer en contact, et **en ce que** la face du disque au moins prévu ainsi que le matériau conducteur (121 ; 123) s'étendent dans un plan perpendiculaire à l'axe de rotation du volant (102).

2. Système de retour automatique d'indicateur de changement de direction selon la revendication 1, **caractérisé en ce que** les organes conducteurs (124 ; 125) sont agencés de telle sorte qu'ils sont en contact local permanent avec le disque (120 ; 130) au moins prévu.

3. Système de retour automatique d'indicateur de changement de direction selon l'une des revendications précédentes, **caractérisé en ce que** le matériau conducteur (122 ; 123) définit des pistes électriques (122 ; 123) disposées radialement par rapport à l'axe du disque (120 ; 130).

4. Système de retour automatique d'indicateur de changement de direction selon l'une des revendications précédentes, **caractérisé en ce que** le matériau conducteur (122 ; 123) définit des pistes électriques (122 ; 123) rectangulaires sensiblement arquées longitudinalement de telle manière qu'elles aient une forme sensiblement concave par rapport à l'axe de rotation du votant (102).

5. Système de retour automatique d'indicateur de changement de direction selon la revendication 4, **caractérisé en ce que** les organes (124 ; 125) sont disposés le long de l'axe radial du disque (120 ; 130) de telle manière que, lors d'une rotation du volant (102), chacun d'eux peut entrer en contact avec une piste (122 ; 123) correspondante.

6. Système de retour automatique d'indicateur de changement de direction selon l'une des revendications précédentes, **caractérisé en ce qu**'il comporte un disque (120 ; 130) muni d'un matériau conducteur (122 ; 123) formant au moins deux portions de couronne électrique décalées angulairement qui définissent un ensemble de deux pistes électriques (122 ; 123) au moins et en ce que chacun des deux organes (124 ; 125) au moins prévu est agencé de telle manière qu'il peut entrer en contact avec l'une des deux pistes électriques (122 ; 123 ; 134 ; 136) au moins prévue, de sorte que, notamment, un sens de rotation du volant (102) est détecté selon que l'un ou l'autre des organes (124 ; 125) entre en premier en contact avec sa piste correspondante (122 ; 123).

7. Système de retour automatique d'indicateur de changement de direction selon la revendication 6, **caractérisé en ce que** le matériau conducteur (122 ; 123) définit en outre une troisième piste électrique (135) en forme de couronne sur la face du disque (120 ; 130).

8. Système de retour automatique d'indicateur de changement de direction selon la revendication 7, **caractérisé en ce que** la troisième piste (135) et les deux portions de pistes (134 ; 136) au moins prévues sont en contact.

9. Système de retour automatique d'indicateur de changement de direction selon la revendication 7 ou 8, **caractérisé en ce qu**'une portion de la troisième piste (135) se trouve entre les deux autres pistes (134 ; 136).

10. Système de retour automatique d'indicateur de changement de direction selon l'une des revendications 7 à 9, **caractérisé en ce qu**'il comporte trois organes conducteurs (131 -133) disposés radialement par rapport à l'axe du disque (120 ; 130), chacun des trois organes (131 - 133) étant respectivement associé à une des trois pistes électriques (134 ; 136).

11. Système de retour automatique d'indicateur de changement de direction selon la revendication 10, **caractérisé en ce que** l'organe conducteur (132) associé à la troisième piste (135) est connecté à une masse électrique.

12. Système de retour automatique d'indicateur de changement de direction selon l'une des revendications 7 à 11, **caractérisé en ce que** les organes conducteurs (131 - 133) sont fixes et le disque (120 ; 130) est sollicité en rotation par le volant (102).

13. Système de retour automatique d'indicateur de changement de direction selon l'une des revendications 7 à 12, **caractérisé en ce que** le disque (120 ; 130) est intégré au volant (102).

14. Système de retour automatique d'indicateur de changement de direction selon l'une des revendications 7 à 13, **caractérisé en ce que**, outre la troisième piste (135), le disque (120 ; 130) est muni de quatre portions de couronne électrique qui définissent quatre pistes électriques, celles-ci étant décalées deux à deux angulairement et disposées deux à deux de façon diamétralement opposée autour du disque (120 ; 130).

15. Système de retour automatique d'indicateur de changement de direction selon les revendications 1 à 5, **caractérisé en ce qu**'il comporte au moins deux pistes distinctes (122; 123) décalées angulairement et disposées radialement par rapport à l'axe du disque (120 ; 130) et au moins deux organes conducteurs (124 ; 125) associés respectivement aux deux pistes (120 ; 130), ces organes étant disposés en regard de la face du disque (120 ; 130) de sorte qu'ils puissent entrer en contact avec la piste correspondante (122 ; 123) lors d'une rotation du volant (102).

16. Système de retour automatique d'indicateur de changement de direction selon la revendication 15, **caractérisé en ce que** les disques sont fixes et les organes conducteurs sont sollicités en rotation par le volant.

17. Système de retour automatique d'indicateur de changement de direction selon l'une des revendications 15 à 16, **caractérisé en ce que** les disques sont intégrés au volant (102).

18. Système de retour automatique d'indicateur de changement de direction selon l'une des revendications précédentes, **caractérisé en ce que** les organes conducteurs (124 ; 125 ; 131 -133) sont des frotteurs.

19. Système de retour automatique d'indicateur de changement de direction selon l'une des revendications 15 et 16, **caractérisé en ce que** le disque (120; 130) est muni de quatre portions de couronne électrique qui définissent quatre pistes électriques distinctes, celles-ci étant décalées deux à deux angulairement et disposées deux à deux de façon diamétralement opposée autour du disque (120 ; 130).

20. Système de retour automatique d'indicateur de changement de direction selon l'une des revendications précédentes, **caractérisé en ce que** les organes conducteurs (124 ; 125; 131 - 133) sont des lames métalliques courbées.

## Claims

1. Automatic cancelling system of a turn indicator associated with a steering wheel (102), comprising an equipment (100) guided in displacement to alternatively control a power supply of the right or left indicators (113) in a road mode (106; 109) and/or highway mode (107; 108), an electronic management module (112) of said control commands in particular for stopping the power supply of the blinker switches (113) when a required event is detected, a detection mean (101) of the steering wheel (102) rotation able to provide the required event to the management module (112) **characterized by** the fact that said detection mean (101) comprises at least one disk (120; 130) equipped on one face with a conducting material (122 ; 123) and at least two conducting parts (124 ; 125) in front of and in local contact with said face, in a manner that, during the rotation of the steering wheel (102), said parts (124; 125) and said material (122; 123) can enter into contact, and by the fact that the face of the one at least one foreseen disk as well as the conducting material (121; 123) extend in a plane perpendicular to the axis of rotation of the steering wheel (102).

2. Automatic cancelling system of a turn indicatoraccording to claim 1 wherein the conducting parts (124 ; 125) are arranged in such a manner that they are in permanent local contact with the at least one foreseen disk (120;130).

3. Automatic cancelling system of a turn indicator according to one of the previous claims wherein the conducting material (122; 123) defines electric tracks (122; 123) that are radially laid out with respect to the axis of the disk (120; 130).

4. Automatic cancelling system of a turn indicator according to one of the previous claims wherein the conducting material (122; 123) defines rectangular electric tracks (122; 123) noticeably arched longitudinally in a manner that they have a noticeably concave shape with respect to rotation axis of the steering wheel (102).

5. Automatic cancelling system of a turn indicator according to claim 4 wherein the parts (124; 125) are laid out along the radial axis of the disk (120; 130) in such a manner that during the rotation of the steering wheel (102), each of them can enter into contact with a corresponding track (122, 123).

6. Automatic cancelling system of a turn indicator according to one of the previous claims wherein it comprises a disk (120;130) equipped of a conducting material (122; 123) forming at least two angularly shifted electric ring portions which define a group of at least two electric tracks (122; 123) and wherein each of the at least two foreseen parts (124; 125) is arranged in a manner that it can enter into contact with one of the at least two foreseen electric tracks (122; 123; 134; 136), in such a way that in particular the rotation direction of a steering wheel (102) is detected depending on the fact that one or the other part (124;125) enters into contact first with its corresponding track (122; 123).

7. Automatic cancelling system of a turn indicator according to claim 6 wherein the conducting material (122; 123) defines furthermore a third electric track (135) with a ring shape on the face of the disk (120; 130).

8. Automatic cancelling system of a turn indicator according to claim 7 wherein the third track (135) and the at least two foreseen track portions (134; 136) enter into contact.

9. Automatic cancelling system of a turn indicator according to claim 7 or 8 wherein a portion of the third track (135) is in between the two other tracks (134; 136).

10. Automatic cancelling system of a turn indicator according to one of claims 7 to 9 wherein it comprises three conducting parts (131-133) arranged radially with respect to the axis of the disk (120;130), each of these three parts (131-133) is respectively associated with one of the three electric tracks (134; 136).

11. Automatic cancelling system of a turn indicator according to claim 10 wherein the conducting part (132) associated with the third track (135) is connected to an electric ground.

12. Automatic cancelling system of a turn indicator according to one of claims 7 to 11 wherein the conducting parts (131-133) are fixed and the disk (120; 130) is solicited in rotation by the steering wheel (102).

13. Automatic cancelling system of a turn indicator according to claims 7 to 12 wherein the disk (120; 130) is integrated in the steering wheel (102).

14. Automatic cancelling system of a turn indicator according to claims 7 to 13 wherein further to the third track (135), the disk (120; 130) is equipped with four electric ring portions which define four electric tracks, these latter being angularly shifted two by two and arranged two by two in a diametrically opposite way around the disk (120; 130).

15. Automatic cancelling system of a turn indicator according to claims 1 to 5 wherein it comprises at least two separated tracks (122; 123) angularly shifted and radially arranged with respect to the axis of the disk (120; 130) and at least two conducting parts (124; 125) associated respectively with two tracks (120; 130), these parts being arranged in front of the face of the disk (120; 130) in a manner that they can enter into contact with the corresponding track (122; 123) when the steering wheel (102) is rotated.

16. Automatic cancelling system of a turn indicator according to claim 15 wherein the disks are fixed and the conducting parts are solicited in rotation by the steering wheel.

17. Automatic cancelling system of a turn indicator according to claims 15 to 16 wherein the disks are integrated in the steering wheel (102).

18. Automatic cancelling system of a turn indicator according to one of the previous claims wherein the conducting parts (124; 125; 131-133) are sliding contacts.

19. Automatic cancelling system of a turn indicator according to one of claims 15 and 16 wherein the disk (120; 130) is equipped with four electric ring portions defining four separated electric tracks, these latter being angularly shifted two by two in a diametrically opposite way around the disk (120; 130).

20. Automatic cancelling system of a turn indicator according to one of the previous claims wherein the conducting parts (124; 125; 131-133) are curved metallic blades.

## Patentansprüche

1. Automatische, einem Lenkrand zugeordnete Rückstelleinrichtung für einen Fahrtrichtungsanzeiger, welche eine in der Bewegung geführte Ausrüstung (100) umfasst, um alternativ eine Versorgung des linken oder rechten Fahrtrichtungsanzeigers (113) in einem Strassenmodus (106 ; 109) und/oder Autobahnmodus (107 ; 108) zu steuern, einem elektronischen Verwaltungsmodul (112) der Steuerbefehle, um insbesondere, die Versorgung der Fahrtrichtungsanzeiger (113) zu unterbrechen, wenn ein vorgeschriebenes Ereignis detektiert wird, ein Detektormittel (101) der Drehung des Lenkrads (102) das geeignet ist, dem Verwaltungsmodul (112) das vorgeschriebene Ereignis zu liefern, **dadurch gekennzeichnet, dass** dieses Detektormittel (101) mindestens eine Scheibe (120 ; 130), die auf einer Seite mit einem leitenden Material (122; 123) versehen ist, und mindestens zwei leitende Organe (124; 125), welche sich gegenüber und in lokalem Kontakt mit dieser Seite befinden, umfasst , so daß bei einer Drehung des Lenkrads (102) diese Organe (124; 125) und besagtes Material (122; 123) in Kontakt treten können, und, **dadurch**, dass die Seite der zumindest einen vorgesehenen Scheibe sowie das leitende Material (121; 123) sich in einer Ebene erstrecken, die senkrecht zur Drehachse des Lenkrads (102) steht.

2. Automatische Rückstelleinrichtung für einen Fahrtrichtungsanzeiger nach Anspruch 1, **dadurch gekennzeichnet, dass** die leitenden Organe (124; 125) so angeordnet werden, daß sie in ständigem lokalem Kontakt mit der zumindest einen vorgesehenen Scheibe (120; 130) stehen.

3. Automatische Rückstelleinrichtung für einen Fahrtrichtungsanzeiger nach einem der vorhergehenden Ansprüche, **dadurch gekennzeichnet, dass** das leitende Material (122; 123) elektrische Bahnen (122; 123) definiert, welche bezüglich der Achse der Scheibe (120; 130) radial angeordnet sind.

4. Automatische Rückstelleinrichtung für einen Fahrtrichtungsanzeiger nach einem der vorhergehenden Ansprüche, **dadurch gekennzeichnet, dass** das leitende Material (122; 123) rechteckige, in Längsrichtung gebogene elektrische Bahnen (122; 123) definiert in der Weise, daß sie eine merklich konkave Form hinsichtlich der Drehachse des Lenkrads (102) haben.

5. Automatische Rückstelleinrichtung für einen Fahrtrichtungsanzeiger nach Anspruch 4, **dadurch gekennzeichnet, dass** die Organe (124; 125) entlang der radialen Achse der Scheibe (120; 130) angeordnet sind, in der Weise, dass bei einer Drehung des Lenkrads (102), jedes von ihnen in Kontakt mit einer entsprechenden Bahn (122; 123) kommen kann.

6. Automatische Rückstelleinrichtung für einen Fahrtrichtungsanzeiger nach einem der vorhergehenden Ansprüche, **dadurch gekennzeichnet, dass** sie eine Scheibe (120; 130) umfasst, die mit einem leitenden Material (122; 123) versehenen ist, welches zumindest zwei winkelmässig versetzte elektrische Ringabschnitte bildet, die zumindest eine Einheit von zwei elektrischen Bahnen (122; 123) definieren und, wobei jedes der zumindest zwei vorgesehenen Organe (124; 125) auf solche Weise angeordnet wird, dass es in Kontakt mit einer der zumindest zwei vorgesehenen elektrischen Bahnen (122; 123;.134; 136) kommen kann, so daß insbesondere eine Drehrichtung des Lenkrads (102) detektiert wird je nachdem, ob das eine oder andere der Organe (124 ; 125) als erstes mit seiner entsprechenden Spur (122; 123) in Kontakt tritt.

7. Automatische Rückstelleinrichtung für einen Fahrtrichtungsanzeiger nach Anspruch 6, **dadurch gekennzeichnet, dass** das leitende Material (122; 123) außerdem eine dritte elektrische Bahn (135) in Form eines Rings auf der Seite der Scheibe (120; 130) definiert.

8. Automatische Rückstelleinrichtung für einen Fahrtrichtungsanzeiger nach Anspruch 7, **dadurch gekennzeichnet, dass** die dritte Bahn (135) und die zumindest zwei vorgesehenen Bahnabschnitte (134; 136) in Kontakt stehen.

9. Automatische Rückstelleinrichtung für einen Fahrtrichtungsanzeiger nach Anspruch 7 oder 8, **dadurch gekennzeichnet, dass** ein Abschnitt der dritten Bahn (135) sich zwischen den zwei anderen Bahnen (134; 136) befindet.

10. Automatische Rückstelleinrichtung für einen Fahrtrichtungsanzeiger nach einem der Ansprüche 7 bis 9, **dadurch gekennzeichnet, dass** sie drei leitende Organe (131 - 133) umfasst, welche radial bezügliche der Achse der Scheibe (120; 130) angeordnet sind, wobei jedes der drei Organe (131 - 133) jeweils einer der drei elektrischen Bahnen (134; 136) zugeordnet ist.

11. Automatische Rückstelleinrichtung für einen Fahrtrichtungsanzeiger nach Anspruch 10, **dadurch gekennzeichnet, dass** das der dritten Bahn (135) zugeordnete leitende Organ (132) an eine elektrische Erde angeschlossen ist.

12. Automatische Rückstelleinrichtung für einen Fahrtrichtungsanzeiger nach einem der Ansprüche 7 bis 11, **dadurch gekennzeichnet, dass** die leitenden Organe (131 - 133) feststehend sind, und die Scheibe (120 130) durch das Lenkrad (102) drehmässig mitbewegt wird.

13. Automatische Rückstelleinrichtung für einen Fahrtrichtungsanzeiger nach einem der Ansprüche 7 bis 12, **dadurch gekennzeichnet, dass** die Scheibe (120; 130) ins Lenkrad (102) integriert ist.

14. Automatische Rückstelleinrichtung für einen Fahrtrichtungsanzeiger nach einem der Ansprüche 7 bis 13, **dadurch gekennzeichnet, dass** außer der dritten Bahn (135), die Platte (120; 130) mit vier elektrischen Ringabschnitten versehen ist, die vier elektrische Bahnen definieren, die jeweils paarweise winkelmässig versetzt sind und die jeweils paarweise diametral entgegengesetzt um die Platte (120; 130) angeordnet sind.

15. Automatische Rückstelleinrichtung für einen Fahrtrichtungsanzeiger nach einem der Ansprüche 1 bis 5, **dadurch gekennzeichnet, dass** sie wenigstens zwei verschiedene Bahnen (122; 123) umfasst, die winkelmässig versetzt sind und hinsichtlich der Achse der Scheibe radial (120; 130) angeordnet sind, und wenigstens zwei leitende Organe (124; 125) welche jeweils den zwei Bahnen (120; 130) zugeordnet sind, wobei diese Organe der Seite der Scheibe (120; 130) zugewandt sind, so daß sie in Kontakt mit der entsprechenden Bahn (122; 123) bei einer Drehung des Lenkrads (102) kommen können.

16. Automatische Rückstelleinrichtung für einen Fahrtrichtungsanzeiger nach Anspruch 15, **dadurch gekennzeichnet, dass** die Platten feststehend sind und die leitenden Organe in Drehung durch das Lenkrad mitbewegt werden.

17. Automatische Rückstelleinrichtung für einen Fahrtrichtungsanzeiger nach einem der Ansprüche 15 bis 16, **dadurch gekennzeichnet, dass** die Scheiben ins Lenkrad (102) integriert sind.

18. Automatische Rückstelleinrichtung für einen Fahrtrichtungsanzeiger nach einem der vorhergehenden Ansprüche, **dadurch gekennzeichnet, dass** die leitenden Organe (124; 125; 131 - 133) Gleitschuhe sind.

19. Automatische Rückstelleinrichtung für einen Fahrtrichtungsanzeiger nach einem der Ansprüche 15 und 16, **dadurch gekennzeichnet, dass** die Scheibe (120; 130) mit vier elektrischen Ringabschnitten versehen ist, die vier verschiedene elektrische Bahnen definieren, wobei diese jeweils paarweise winkelmässig versetzt sind und die paarweise diametral entgegengesetzt um die Platte (120; 130) angeordnet sind.

20. Automatische Rückstelleinrichtung für einen Fahrtrichtungsanzeiger nach einem der vorhergehenden Ansprüche, **dadurch gekennzeichnet, dass** die leitenden Organe (124; 125; 131 - 133) gebogene metallische Streifen sind.
